# FASCICULE DE BREVET EUROPEEN

(11) **EP 3 656 620 B1**
(45) Date de publication et mention de la délivrance du brevet: **26.01.2022**
(21) Numéro de dépôt: 19210572.4
(22) Date de dépôt: 21.11.2019
(51) Int. Cl.: B60T 13/66, B60T 17/22

(54) **VÉHICULE FERROVIAIRE COMPORTANT UN SYSTÈME DE FREINAGE PERFECTIONNÉ**
SCHIENENFAHRZEUG, DAS MIT EINEM VERBESSERTEN BREMSSYSTEM AUSGESTATTET IST
RAILWAY VEHICLE COMPRISING AN IMPROVED BRAKING SYSTEM

(30) Priorité: 22.11.2018 FR 1871695
(43) Date de publication de la demande: 27.05.2020
(73) Titulaire: SpeedInnov, 75008 Paris (FR)
(72) Inventeur: BRISOU, Florent, 17540 FONTPATOUR DE VERINES (FR)
(74) Mandataire: Lavoix

(56) Documents cités:
- WO-A1-2008/009443
- DE-A1-102015 110 053
- FR-A1- 3 038 283

## Description

La présente invention concerne un véhicule ferroviaire comportant un système de freinage.

Un exemple de système de freinage est décrit dans FR 3 038 283 ou WO 2008/009443.

Les systèmes de freinage connus dans l'état de la technique comportent des moyens de freinage dynamique et des moyens de freinage par friction.

Les moyens de freinage dynamique sont généralement formés par des moyens de traction du véhicule ferroviaire, le freinage dynamique consistant en une réduction de la vitesse grâce à ces moyens de traction.

Les moyens de freinage par friction agissent quant à eux mécaniquement au niveau des essieux de bogies du véhicule. Ces moyens de freinage comprennent des disques de frein solidaires des essieux, et des garnitures de frein, les garnitures étant munies de matériaux de friction. Le freinage par friction est réalisé par serrage de chaque disque de friction entre deux garnitures de friction correspondantes.

Les matériaux de friction s'usent lors des freinages, et doivent régulièrement être remplacés lors d'opérations de maintenance. Le remplacement de ces matériaux de friction implique un coût important, notamment sur un véhicule ferroviaire à grande vitesse ou à très grande vitesse.

Afin de réduire l'usure des matériaux de friction, les efforts de freinage demandés au véhicule ferroviaire sont généralement répartis entre les moyens de freinage dynamique et les moyens de freinage par friction. Toutefois, cette répartition n'est généralement pas satisfaisante dans l'état de la technique, car elle n'entraine pas une réduction d'usure satisfaisante.

Ainsi, l'invention a notamment pour but de réduire de manière optimale l'usure des matériaux de friction.

A cet effet, l'invention a notamment pour objet un véhicule ferroviaire selon la revendication 1.

L'invention permet de prioriser de manière automatique le recours au freinage dynamique (réduction de la vitesse directement par les moyens de traction) plutôt qu'au freinage par friction. Les moyens de freinage par friction sont donc sollicités au minimum, ce qui permet de prolonger la durée de vie des matériaux de friction, et donc de réduire les coûts de maintenance.

Un véhicule ferroviaire selon l'invention peut comporter en outre l'une ou plusieurs des caractéristiques suivantes, prises seules ou selon toute combinaison techniquement envisageable.
- L'unité centrale est propre à collecter et/ou mémoriser des paramètres du véhicule ferroviaire influant sur l'effort de freinage global nécessaire pour répondre à la consigne de freinage global.
- Les paramètres pris en compte par les moyens de calcul d'effort de freinage global comportent au moins l'un des paramètres suivants : - la capacité maximale des moyens de freinage dynamique; - une capacité maximale des moyens de freinage par friction, pour chaque bogie; - un niveau d'adhérence roue-rail maximum qui peut être sollicité sur chaque bogie; - une masse supportée individuellement par chaque bogie; et - une disponibilité de freinage par friction de chaque bogie.
- Les bogies du véhicule ferroviaire comprennent au moins un bogie moteur associé au dispositif de traction et les paramètres pris en compte par les moyens de calcul d'effort de freinage global comportent au moins l'un des paramètres suivants : - la capacité maximale des moyens de freinage dynamique pour chaque bogie moteur; - une capacité maximale des moyens de freinage par friction, pour chaque bogie; - un niveau d'adhérence roue-rail maximum qui peut être sollicité sur chaque bogie; - une masse supportée individuellement par chaque bogie; et - une disponibilité de freinage dynamique pour chaque bogie moteur et/ou de freinage par friction pour chaque bogie.
- Les moyens de calcul d'un effort de freinage à assurer par les moyens de freinage par friction sont propres à prendre en compte une disponibilité de freinage par friction de chaque bogie pour calculer l'effort de freinage à assurer par les moyens de freinage par friction de chaque bogie, de sorte qu'un bogie non disponible ne se voit pas affecter un effort, et l'effort à réaliser par les bogies n'est réparti que sur les bogies actifs au freinage.
- Le véhicule comprend au moins une voiture remorque, dépourvue de dispositif de traction, et comportant au moins un bogie porteur.

L'invention concerne également un procédé de freinage selon la revendication 7.

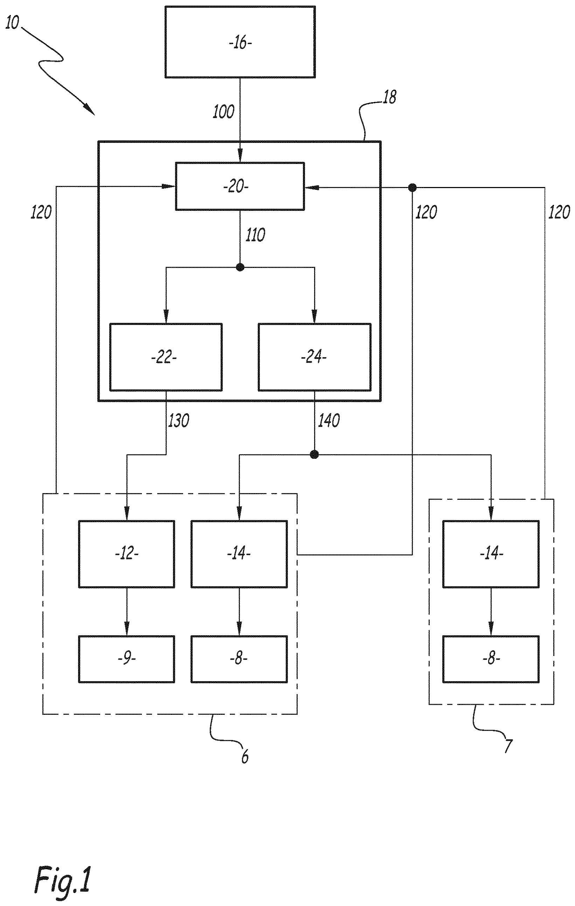

L'invention sera mieux comprise à la lecture de la description qui va suivre, donnée uniquement à titre d'exemple et faite en se référant à [Fig 1] la figure unique annexée, représentant schématiquement un système de freinage équipant un véhicule ferroviaire selon un exemple de mode de réalisation de l'invention.

Un véhicule ferroviaire selon l'invention comporte un ensemble d'au moins une voiture. Au moins une voiture est motrice, et l'ensemble comporte de manière optionnelle au moins une voiture remorque.

La voiture motrice comporte un dispositif de traction, comprenant notamment au moins un bogie et notamment au moins bogie moteur 6. Ce bogie moteur 6 est propre à la voiture motrice, ou en variante partagé avec une voiture adjacente, auquel cas la voiture motrice et la voiture adjacente reposent toutes deux sur ce bogie moteur 6 partagé.

Chaque voiture remorque comporte par ailleurs au moins un bogie porteur 7, c'est-à-dire dépourvu de moyens de traction. Ce bogie porteur 7 est propre à la voiture remorque, ou en variante partagé avec une voiture adjacente, auquel cas la voiture remorque et la voiture adjacente reposent toutes deux sur ce bogie porteur 7 partagé.

Conformément à une variante, la voiture motrice peut reposer sur un bogie porteur 7 et un bogie moteur 6.

Chaque bogie, porteur 7 ou moteur 6, comporte au moins un essieu muni de deux roues, et généralement deux essieux.

Le véhicule ferroviaire comporte des moyens 8 de freinage par friction, comprenant pour au moins l'une, de préférence chaque, roue de chaque bogie, un dispositif de freinage par friction équipant cette roue. Un tel dispositif de freinage comprend de manière classique un disque de frein, solidarisé en rotation avec la roue, et des garnitures de frein. Chaque garniture de frein comporte de manière classique un matériau de friction.

En variante, des dispositifs de freinage sont associés aux essieux plutôt qu'aux roues.

Chaque bogie moteur 6 comporte en outre des moyens de traction 9, comprenant au moins un moteur de traction de type classique, relié cinématiquement à au moins un essieu du bogie moteur 6, dit essieu motorisé. Les moyens de traction 9 forment des moyens de freinage dynamique. En effet, il est possible d'accélérer ou de décélérer le véhicule ferroviaire par l'intermédiaire de ces moyens de traction 9.

Le véhicule ferroviaire comporte un système de freinage 10, représenté sur la figure 1.

Le système de freinage 10 comporte, pour chaque bogie moteur, des moyens 12 de contrôle de freinage dynamique et des moyens 14 de contrôle de freinage par friction.

Les moyens de contrôle de freinage dynamique 12 sont propres à commander les moyens de freinage dynamique 9, et plus particulièrement à commander les moteurs de traction pour effectuer un freinage dynamique.

Les moyens de contrôle de freinage par friction 14 sont propres à commander les moyens de freinage par friction 8, et plus particulièrement à commander le serrage des garnitures de frein contre le disque de frein pour effectuer un freinage par friction.

Le système de freinage 10 selon l'invention comporte un unique organe de commande de traction/freinage 16, notamment un manipulateur de traction/freinage. Cet organe de commande 16 est par exemple manuel, auquel cas il permet à un conducteur du véhicule ferroviaire de donner au système de freinage 10 une consigne 100 de freinage globale variable en fonction de la position de cet organe de commande 16.

En variante, l'organe de commande est formé par un dispositif de contrôle automatique du véhicule ferroviaire agissant soit à la place du conducteur, soit en surveillance des actions de celui-ci. Cet organe de commande automatique est alors propre à fournir automatiquement la consigne de freinage 100 au système de freinage 10.

Le système de freinage 10 comporte une unité centrale de freinage 18, reliée à l'organe de commande 16 de manière à recevoir la consigne de freinage globale 100.

L'unité centrale 18 comporte des moyens 20 de calcul d'un effort de freinage global 110 nécessaire pour répondre à la consigne de freinage globale 100.

A cet effet, l'unité centrale 18 est propre à collecter et/ou mémoriser des paramètres 120 du véhicule ferroviaire influant sur l'effort de freinage nécessaire.

Les paramètres 120 pris en compte par l'unité centrale 18 sont notamment les suivants :
- la capacité maximale des moyens de freinage dynamique 9, pour chaque bogie moteur 6 (c'est-à-dire l'effort de freinage dynamique maximal pouvant être assuré par chaque bogie moteur 6) ;
- la capacité maximale des moyens de freinage par friction 8 pour chaque bogie 6, 7 (c'est-à-dire l'effort de freinage par friction maximal pouvant être assuré par chaque bogie 6, 7) ;
- le niveau d'adhérence roue-rail maximum qui peut être sollicité sur chaque bogie 6, 7 ;
- la masse supportée individuellement par chaque bogie 6, 7 ;
- la disponibilité de freinage dynamique et/ou par friction de chaque bogie 6, 7 (c'est-à-dire, pour chaque bogie, si ce bogie est disponible pour assurer un freinage (le bogie est alors dit disponible), ou s'il n'est pas disponible pour assurer le freinage, notamment en cas de défaillance (le bogie est alors dit isolé)).

La masse supportée individuellement par chaque bogie 6, 7, est collectée par des moyens de mesure de masse classiques, par exemple via la mesure de pression dans des coussins de suspension secondaire des bogies 6, 7.

Le paramètre de disponibilité consiste à établir si les moyens de freinage par friction sont actifs ou isolés, pour chaque bogie 6, 7. Pour chaque bogie, la disponibilité de freinage par friction peut être déterminée en analysant l'état d'un contact associé à un robinet d'isolement et de purge des circuits pneumatiques ou hydrauliques de freinage du bogie, ou l'état d'isolement renvoyé par les moyens 14 de contrôle de freinage par friction suite à une commande d'isolement à distance. Par ailleurs, la disponibilité de freinage dynamique est établie par isolement automatique ou manuel en cas de défaut, et remontée de l'information vers l'unité centrale 18 via un réseau informatique.

Les moyens de calcul 20 calculent l'effort de freinage 110 au niveau global du véhicule ferroviaire, à partir des paramètres 120 mentionnés ci-dessus et de la consigne 100 donnée par le conducteur au manipulateur 16 ou par le dispositif de contrôle automatique.

L'unité centrale 18 comporte par ailleurs des moyens 22 de calcul d'un effort de freinage 130 à assurer par les moyens de freinage dynamique 9 en tenant compte de la masse totale du véhicule ferroviaire.

En d'autres termes, les moyens de calcul 22 établissent si, en fonction de la vitesse, les moyens de freinage dynamique, c'est-à-dire le frein dynamique des bogies moteurs 6 sur lesquels il est disponible (non isolé), suffisent à couvrir la consigne d'effort requise. Si cela est le cas, l'intégralité de l'effort de freinage est assurée par les moyens de freinage dynamique 9.

Dans le cas contraire, l'effort maximal possible du frein dynamique est demandé aux moyens de freinage dynamiques 9, et la différence qui en résulte avec la consigne d'effort global 110 est reportée sur les moyens de freinage par friction 8.

On notera que la consigne de freinage dynamique est fournie aux moyens de commande 12, qui commandent les moyens de freinage dynamiques 9 en fonction de cette consigne.

L'unité centrale 18 comporte par ailleurs des moyens 24 de calcul d'un effort de freinage 140 à assurer par les moyens de freinage par friction 8 de chaque bogie 6, 7. Ces moyens de calcul 24 déterminent une consigne bogie par bogie puisque, la limite d'adhérence étant la même pour tous mais pas la masse, l'effort maximal que l'on peut appliquer diffère d'un bogie 6,7 à l'autre.

Plus particulièrement, le niveau maximal d'adhérence sollicitable est prédéterminé. Il s'agit par exemple ce celui qui est celui mentionné dans la norme STI Loc&Pas : 2014 (soit 15% jusqu'à 250 km/h, puis décroissance linéaire pour atteindre 10% à 350 km/h). Connaissant ensuite la masse sur chaque bogie 6, 7, on en déduit l'effort maximal à ne pas dépasser pour que l'adhérence maximale selon la norme STI Loc&Pas : 2014 soit respectée. Ceci implique de mémoriser également l'équivalent masse des inerties tournantes pour chaque bogie, de manière à connaître la masse dynamique Mdyn puisque l'effort est calculée par la formule Fmax = Mdyn x Adhérence maxi, et donc Mdyn = masse mesurée sur la suspension + équivalent masse des inerties tournantes.

Les moyens de calcul 24 vont par ailleurs prendre en compte si un bogie moteur ou porteur est isolé en freinage ou non. En effet, un bogie moteur ou porteur isolé ne se voit pas affecter un effort, et l'effort à réaliser par les bogies moteurs ou porteurs n'est réparti que sur les bogies actifs au freinage, c'est-à-dire que sur les bogies non-isolés.

On notera que le système de freinage 10 permet de réaliser le procédé de freinage qui va maintenant être décrit.

Le procédé de freinage comporte les étapes suivantes :
- actionnement de l'organe de commande 16 (en variante : demande de freinage par le dispositif de contrôle automatique) pour donner une consigne de freinage globale,
- réception de la consigne de freinage globale par l'unité centrale de freinage 18,
- calcul d'un effort de freinage global nécessaire pour répondre à la consigne de freinage globale, en fonction de paramètres du véhicule ferroviaire influant sur cet effort de freinage global,
- calcul d'un effort de freinage dynamique à assurer par les moyens de freinage dynamique 9, comprenant la comparaison d'une capacité maximale de freinage des moyens de freinage dynamiques 9,
- si les moyens de freinage dynamique 9 suffisent à assurer l'intégralité de l'effort de freinage global, alors l'intégralité de l'effort de freinage global est assurée par les moyens de freinage dynamique 9,
- si les moyens de freinage dynamique 9 ne suffisent pas à assurer l'intégralité de l'effort de freinage global, alors les moyens de freinage dynamique 9 sont activés selon leur capacité maximale de freinage,
- calcul d'un effort de freinage à assurer par les moyens de freinage par friction 8, de manière à donner une consigne d'effort de freinage par friction nulle aux moyens de freinage par friction 8 si les moyens de freinage dynamiques suffisent à assurer l'intégralité de l'effort de freinage, et à donner une consigne d'effort de freinage par friction correspondant à la différence entre la consigne d'effort de freinage global et l'effort de freinage dynamique dans le cas contraire.

On notera que l'invention n'est pas limitée au mode de réalisation précédemment décrit, mais pourrait présenter diverses variantes complémentaires.

## Revendications

1. Véhicule ferroviaire, comportant un ensemble d'au moins une voiture et comportant au moins un bogie portant l'ensemble, l'ensemble comprenant au moins une voiture motrice comportant un dispositif de traction, le véhicule comprenant un système de freinage (10) comprenant des moyens de freinage par friction (8) équipant chaque bogie, et des moyens de freinage dynamique (9) formés par le dispositif de traction, le système de freinage (10) comportant :
- un unique organe de commande de traction/freinage (16), permettant de donner une consigne de freinage globale,
- une unité centrale de freinage (18), reliée à l'organe de commande (16) de manière à recevoir la consigne de freinage globale, et comprenant :
- des moyens (20) de calcul d'un effort de freinage global nécessaire pour répondre à la consigne de freinage globale, en fonction de paramètres du véhicule ferroviaire influant sur cet effort de freinage global
- des moyens (22) de calcul d'un effort de freinage dynamique à assurer par les moyens de freinage dynamique (9), configurés pour établir si les moyens de freinage dynamique (9) suffisent à assurer l'intégralité de l'effort de freinage global, et pour donner une consigne d'effort de freinage dynamique correspondant à l'effort de freinage global si les moyens de freinage dynamique suffisent à assurer l'intégralité de l'effort de freinage global, et, dans le cas contraire, pour donner une consigne d'effort de freinage dynamique égale à une capacité maximale de freinage des moyens de freinage dynamique, et
- des moyens (24) de calcul d'un effort de freinage à assurer par les moyens de freinage par friction (8), configurés pour donner une consigne d'effort de freinage par friction nulle aux moyens de freinage par friction (8) si les moyens de freinage dynamique suffisent à assurer l'intégralité de l'effort de freinage global, et pour donner une consigne d'effort de freinage par friction correspondant à la différence entre l'effort de freinage global et l'effort de freinage dynamique dans le cas contraire,
**caractérisé en ce que** les moyens de calcul (24) d'un effort de freinage à assurer par les moyens de freinage par friction (8) sont configurés pour calculer l'effort de freinage à assurer par les moyens de freinage par friction (8) de chaque bogie (6, 7), ces moyens de calcul (24) déterminant une consigne bogie par bogie.

2. Véhicule ferroviaire selon la revendication 1, dans lequel l'unité centrale (18) est propre à collecter et/ou mémoriser des paramètres du véhicule ferroviaire influant sur l'effort de freinage global nécessaire pour répondre à la consigne de freinage global.

3. Véhicule ferroviaire selon la revendication 2, dans lequel les paramètres pris en compte par les moyens de calcul d'effort de freinage global (20) comportent au moins l'un des paramètres suivants :
- la capacité maximale des moyens de freinage dynamique;
- une capacité maximale des moyens de freinage par friction (8), pour chaque bogie;
- un niveau d'adhérence roue-rail maximum qui peut être sollicité sur chaque bogie;
- une masse supportée individuellement par chaque bogie;
- une disponibilité de freinage par friction de chaque bogie.

4. Véhicule ferroviaire selon la revendication 2, dans lequel les bogies du véhicule ferroviaire comprennent au moins un bogie moteur associé au dispositif de traction et les paramètres pris en compte par les moyens de calcul d'effort de freinage global (20) comportent au moins l'un des paramètres suivants :
- la capacité maximale des moyens de freinage dynamique (9) pour chaque bogie moteur (6);
- une capacité maximale des moyens de freinage par friction (8), pour chaque bogie;
- un niveau d'adhérence roue-rail maximum qui peut être sollicité sur chaque bogie;
- une masse supportée individuellement par chaque bogie;
- une disponibilité de freinage dynamique pour chaque bogie moteur et/ou de freinage par friction pour chaque bogie.

5. Véhicule ferroviaire selon l'une quelconque des revendications précédentes, dans lequel les moyens de calcul (24) d'un effort de freinage à assurer par les moyens de freinage par friction (8) sont propres à prendre en compte une disponibilité de freinage par friction de chaque bogie pour calculer l'effort de freinage à assurer par les moyens de freinage par friction (8) de chaque bogie (6, 7), de sorte qu'un bogie non disponible ne se voit pas affecter un effort, et l'effort à réaliser par les bogies n'est réparti que sur les bogies actifs au freinage.

6. Véhicule ferroviaire selon l'une quelconque des revendications précédentes, dans lequel le véhicule comprend au moins une voiture remorque, dépourvue de dispositif de traction, et comportant au moins un bogie porteur.

7. Procédé de freinage d'un véhicule ferroviaire selon l'une quelconque des revendications 1 à 7, comportant les étapes suivantes :
- fourniture d'une consigne de freinage globale par l'organe de commande (16),
- réception de la consigne de freinage globale par l'unité centrale de freinage (18),
- calcul d'un effort de freinage global nécessaire pour répondre à la consigne de freinage globale, en fonction de paramètres du véhicule ferroviaire influant sur cet effort de freinage global,
- calcul d'un effort de freinage dynamique à assurer par les moyens de freinage dynamique (9), comprenant la comparaison d'une capacité maximale de freinage des moyens de freinage dynamiques (9) avec l'effort de freinage global,
- si les moyens de freinage dynamique (9) suffisent à assurer l'intégralité de l'effort de freinage global, alors l'intégralité de l'effort de freinage global est assurée par les moyens de freinage dynamique (9),
- si les moyens de freinage dynamique (9) ne suffisent pas à assurer l'intégralité de l'effort de freinage global, alors les moyens de freinage dynamique (9) sont activés selon leur capacité maximale de freinage,
- calcul d'un effort de freinage à assurer par les moyens de freinage par friction (8), de manière à donner une consigne d'effort de freinage par friction nulle aux moyens de freinage par friction (8) si les moyens de freinage dynamique suffisent à assurer l'intégralité de l'effort de freinage global, et à donner une consigne d'effort de freinage par friction correspondant à la différence entre l'effort de freinage global et l'effort de freinage dynamique dans le cas contraire,
**caractérisé en ce que** le calcul d'un effort de freinage à assurer par les moyens de freinage par friction (8) comporte le calcul de l'effort de freinage à assurer par les moyens de freinage par friction (8) de chaque bogie (6, 7), ce calcul déterminant une consigne bogie par bogie.

## Patentansprüche

1. Schienenfahrzeug, umfassend eine Einheit aus mindestens einem Wagen und umfassend mindestens ein Drehgestell, das die Einheit trägt, die Einheit umfassend mindestens einen Triebwagen umfassend eine Zugvorrichtung, das Fahrzeug umfassend ein Bremssystem (10) umfassend Reibungsbremseinrichtungen (8), mit denen jedes Drehgestell ausgerüstet ist, und dynamische Bremseinrichtungen (9), die von der Zugvorrichtung gebildet sind, das Bremssystem (10) umfassend:
- ein einzelnes Zug-/Bremssteuerungsorgan (16), mit dem ein Gesamtbremsbefehl gegeben werden kann,
- eine zentrale Bremseinheit (18), die mit dem Steuerorgan (16) verbunden ist, um den globalen Bremsbefehl zu empfangen, und umfassend:
- Einrichtungen (20) zum Berechnen einer Gesamtbremskraft, die erforderlich ist, um auf den Gesamtbremsvorgabewert zu reagieren, abhängig von Parametern des Schienenfahrzeugs, die diese Gesamtbremskraft beeinflussen,
- Einrichtungen (22) zum Berechnen einer dynamischen Bremskraft, die von den dynamischen Bremseinrichtungen (9) gewährleistet werden soll, die konfiguriert sind, um festzustellen, ob die dynamischen Bremseinrichtungen (9) ausreichen, um die Gesamtheit der Gesamtbremskraft zu gewährleisten, und um einen Vorgabewert für die dynamische Bremskraft zu geben, der der Gesamtbremskraft entspricht, wenn die dynamischen Bremseinrichtungen ausreichen, um die Gesamtheit der Gesamtbremskraft zu gewährleisten, und um im entgegengesetzten Fall einen Vorgabewert für dynamische Bremskraft zu geben, der gleich wie eine maximale Bremskapazität der dynamischen Bremseinrichtungen ist, und
- Einrichtungen (24) zum Berechnen einer Bremskraft, die von den Reibungsbremseinrichtungen (8) gewährleistet werden soll, die konfiguriert sind, um den Reibungsbremseinrichtungen (8) einen Vorgabewert für die Reibungsbremskraft von null zu geben, wenn die dynamischen Bremseinrichtungen ausreichen, um die Gesamtheit der Gesamtbremskraft zu gewährleisten, und um im entgegengesetzten Fall einen Vorgabewert für die Reibungsbremskraft zu geben, der der Differenz zwischen der Gesamtbremskraft und der dynamischen Bremskraft entspricht,
**dadurch gekennzeichnet, dass** die Berechnungseinrichtungen (24) einer Bremskraft, die von den Reibungsbremseinrichtungen (8) gewährleistet werden soll, konfiguriert sind, um die Bremskraft zu berechnen, die von den Reibungsbremseinrichtungen (8) von jedem Drehgestell (6, 7) gewährleistet werden soll, wobei diese Berechnungseinrichtungen (24) einen Vorgabewert Drehgestell für Drehgestell bestimmen.

2. Schienenfahrzeug nach Anspruch 1, wobei die zentrale Einheit (18) geeignet ist, Parameter des Schienenfahrzeugs zu sammeln und/oder zu speichern, die die Gesamtbremskraft beeinflussen, die erforderlich ist, um auf den GesamtbremsVorgabewert zu reagieren.

3. Schienenfahrzeug nach Anspruch 2, wobei die Parameter, die von den Berechnungseinrichtungen der Gesamtbremskraft (20) berücksichtigt werden, mindestens einen der folgenden Parameter umfassen:
- die maximale Kapazität der dynamischen Bremseinrichtungen;
- eine maximale Kapazität der Reibungsbremseinrichtung (8) für jedes Drehgestell;
- ein maximales Rad-Schiene-Haftungsniveau, das an jedem Drehgestell beansprucht werden kann;
- eine Masse, die von jedem Drehgestell einzeln getragen wird;
- eine Verfügbarkeit von Reibungsbremsen für jedes Drehgestell.

4. Schienenfahrzeug nach Anspruch 2, wobei die Drehgestelle des Schienenfahrzeugs mindestens ein Motordrehgestell umfassen, das mit der Zugvorrichtung assoziiert ist, und die Parameter, die von den Berechnungseinrichtungen der Gesamtbremskraft (20) berücksichtigt werden, mindestens einen der folgenden Parameter umfassen:
- die maximale Kapazität der dynamischen Bremseinrichtungen (9) für jedes Motordrehgestell (6);
- eine maximale Kapazität der Reibungsbremseinrichtung (8) für jedes Drehgestell;
- ein maximales Rad-Schiene-Haftungsniveau, das an jedem Drehgestell beansprucht werden kann;
- eine Masse, die von jedem Drehgestell einzeln getragen wird;
- eine Verfügbarkeit von dynamischem Bremsen für jedes Motordrehgestell und/oder Reibungsbremsen für jedes Drehgestell.

5. Schienenfahrzeug nach einem der vorherigen Ansprüche, wobei die Berechnungseinrichtungen (24) einer Bremskraft, die von den Reibungsbremseinrichtungen (8) gewährleistet werden soll, geeignet sind, eine Verfügbarkeit von Reibungsbremsen von jedem Drehgestell zu berücksichtigen, um die Bremskraft zu berechnen, die von den Reibungsbremseinrichtungen (8) von jedem Drehgestell (6, 7) gewährleistet werden soll, sodass einem nicht verfügbaren Drehgestell keine Kraft zugewiesen wird und die von den Drehgestellen aufzubringende Kraft nur auf die beim Bremsen aktiven Drehgestelle verteilt wird.

6. Schienenfahrzeug nach einem der vorherigen Ansprüche, wobei das Fahrzeug mindestens einen Anhängerwagen umfasst, der keine Zugvorrichtung aufweist und mindestens ein tragendes Drehgestell umfasst.

7. Bremsverfahren eines Schienenfahrzeugs nach einem der Ansprüche 1 bis 7, umfassend die folgenden Schritte:
- Bereitstellen eines Gesamtbrems-Vorgabewerts durch das Steuerungsorgan (16),
- Empfangen des Gesamtbrems-Vorgabewerts durch die zentrale Bremseinheit (18),
- Berechnen einer Gesamtbremskraft, die erforderlich ist, um auf den Gesamtbremsvorgabewert zu reagieren, abhängig von Parametern des Schienenfahrzeugs, die diese Gesamtbremskraft beeinflussen,
- Berechnen einer dynamischen Bremskraft, die durch die dynamischen Bremseinrichtungen (9) gewährleistet werden soll, umfassend ein Vergleichen einer maximalen Bremskapazität der dynamischen Bremseinrichtungen (9) mit der Gesamtbremskraft,
- wenn die dynamischen Bremseinrichtungen (9) ausreichen, um die gesamte Gesamtbremskraft zu gewährleisten, dann wird die gesamte Gesamtbremskraft durch die dynamischen Bremseinrichtungen (9) gewährleistet,
- wenn die dynamischen Bremseinrichtungen (9) nicht ausreichen, um die gesamte Gesamtbremskraft zu gewährleisten, dann werden die dynamischen Bremseinrichtungen (9) entsprechend ihrer maximalen Bremskapazität aktiviert,
- Berechnen einer Bremskraft, die von den Reibungsbremseinrichtungen (8) gewährleistet werden soll, um den Reibungsbremseinrichtungen (8) einen Vorgabewert für die Reibungsbremskraft von null zu geben, wenn die dynamischen Bremseinrichtungen ausreichen, um die Gesamtheit der Gesamtbremskraft zu gewährleisten, und um im entgegengesetzten Fall einen Vorgabewert für die Reibungsbremskraft zu geben, der der Differenz zwischen der Gesamtbremskraft und der dynamischen Bremskraft entspricht,
**dadurch gekennzeichnet, dass** das Berechnen einer Bremskraft, die von den Reibungsbremseinrichtungen (8) gewährleistet werden soll, ein Berechnen der Bremskraft umfasst, die von den Reibungsbremseinrichtungen (8) von jedem Drehgestell (6, 7) gewährleistet werden soll, wobei diese Berechnung einen Vorgabewert Drehgestell für Drehgestell bestimmt.

## Claims

1. A railway vehicle, comprising an assembly of at least one car and comprising at least one bogie carrying the assembly, the assembly comprising at least one powered car comprising a traction device, the vehicle comprising a braking system (10) comprising friction braking means (8) equipping each bogie, and dynamic braking means (9) formed by the traction device, the braking system (10) comprising:
- a single traction/braking control unit (16), allowing an overall braking command to be given,
- a central braking unit (18), connected to the control unit (16) so as to receive the overall braking command, and comprising:
- means (20) for calculating an overall braking force required to respond to the overall braking command, as a function of parameters of the railway vehicle influencing this overall braking force
- means (22) for calculating a dynamic braking force to be provided by the dynamic braking means (9), configured to establish whether the dynamic braking means (9) are sufficient to provide the entire overall braking force and to give a dynamic braking force command corresponding to the overall braking force if the dynamic braking means are sufficient to ensure the entire overall braking force, and, if not, to give a dynamic braking force command equal to a maximum braking capacity of the dynamic braking means, and
- means (24) for calculating a braking force to be ensured by the friction braking means (8), configured to give a zero friction braking force command to the friction braking means (8) if the dynamic braking means are sufficient to ensure the entirety of the overall braking force, and to give a friction braking force command corresponding to the difference between the overall braking force and the dynamic braking force in the opposite case,
**characterised in that** the means (24) for calculating a braking force to be provided by the friction braking means (8) are configured to calculate the braking force to be provided by the friction braking means (8) of each bogie (6, 7), these calculating means (24) determining a separate command for each bogie.

2. The railway vehicle according to claim 1, wherein the central unit (18) is adapted to collect and/or store railway vehicle parameters influencing the overall braking force required to respond to the overall braking command.

3. The railway vehicle according to claim 2, wherein the parameters taken into account by the overall braking force calculation means (20) comprise at least one of the following parameters:
- the maximum capacity of the dynamic braking means;
- a maximum capacity of the friction braking means (8), for each bogie;
- a maximum level of wheel-rail adhesion that can be applied to each bogie;
- a mass supported individually by each bogie;
- an availability of friction braking for each bogie.

4. The railway vehicle according to claim 2, wherein the bogies of the railway vehicle comprise at least one motor bogie associated with the traction device and the parameters taken into account by the overall braking force calculation means (20) comprise at least one of the following parameters:
- the maximum capacity of the dynamic braking means (9) for each motor bogie (6);
- a maximum capacity of the friction braking means (8), for each bogie;
- a maximum level of wheel-rail adhesion that can be applied to each bogie;
- a mass supported individually by each bogie;
- an availability of dynamic braking for each motor bogie and/or of friction braking for each bogie.

5. The railway vehicle according to any one of the preceding claims, in which the means (24) for calculating a braking force to be provided by the friction braking means (8) are adapted to take into account a friction braking availability of each bogie in order to calculate the braking force to be provided by the friction braking means (8) of each bogie (6, 7), so that an unavailable bogie is not assigned a force, and the force to be provided by the bogies is distributed only to the bogies that are active in braking.

6. The railway vehicle according to any one of the preceding claims, wherein the vehicle comprises at least one trailer car, devoid of a traction device, and comprising at least one carrier bogie.

7. A method of braking a railway vehicle according to any of claims 1 to 7, comprising the following steps:
- the controller (16) providing a global braking command,
- the central braking unit (18) receiving the overall braking command,
- an overall braking force required to respond to the overall braking command is calculated, as a function of parameters of the railway vehicle influencing that overall braking force,
- a dynamic braking force to be provided by the dynamic braking means (9) is calculated, which comprises comparing a maximum braking capacity of the dynamic braking means (9) to the overall braking force,
- if the dynamic braking means (9) are sufficient to provide the entire overall braking force, then the entire overall braking force is provided by the dynamic braking means (9),
- if the dynamic braking means (9) are not sufficient to provide the entire overall braking force, then the dynamic braking means (9) are activated according to their maximum braking capacity,
- calculating a braking force to be provided by the friction braking means (8), configured to give a zero friction braking force command to the friction braking means (8) if the dynamic braking means are sufficient to ensure the entirety of the overall braking force, and to give a friction braking force command corresponding to the difference between the overall braking force and the dynamic braking force in the opposite case,
**characterised in that** the calculating of a braking force to be provided by the friction braking means (8) comprising calculating the braking force to be provided by the friction braking means (8) of each bogie (6, 7), these calculating means (24) determining a separate command for each bogie.
